# FASCICULE DE BREVET EUROPEEN

(11) **EP 1 875 675 B1**
(45) Date de publication et mention de la délivrance du brevet: **08.08.2012**
(21) Numéro de dépôt: 06743360.7
(22) Date de dépôt: 20.04.2006
(51) Int. Cl.: H04L 12/46, H04L 12/56

(54) **Procédé d'établissement d'un accès multi-liens entre un réseau local et un réseau distant et modem multi-liens correspondant**
Verfahren zur Aufbau mehrerer Verbindungen zwischen einem lokalen Netzwerk und einem entfernten Netzwerk und entsprechender Mehrverbindungsmodem
Method for establishing a multi-link access between a local network and a remote network, and corresponding multi-link modem

(30) Priorité: 25.04.2005 FR 0551066
(43) Date de publication de la demande: 09.01.2008
(73) Titulaire: Thomson Licensing, 92130 Issy-les-Moulineaux (FR)
(72) Inventeur: BICHOT, Guillaume, F-35630 La Chapelle Chaussee (FR); LEGALLAIS, Yvon, F-35000 Rennes (FR)
(74) Mandataire: Le Dantec, Claude
(86) Numéro de dépôt international: PCT/EP2006/061692
(87) Numéro de publication internationale: WO 2006/114383

(56) Documents cités:
- WO-A-02/41660
- US-A1- 2002 133 618
- US-A1- 2004 090 919
- PHATAK D S ET AL: "IP-in-IP tunneling to enable the simultaneous use of multiple IP interfaces for network level connection striping" COMPUTER NETWORKS, ELSEVIER SCIENCE PUBLISHERS B.V., AMSTERDAM, NL, vol. 43, no. 6, 20 décembre 2003 (2003-12-20), pages 787-804, XP004470530 ISSN: 1389-1286
- SKLOWER UNIVERSITY OF CALIFORNIA K ET AL: "The PPP Multilink Protocol (MP)" IETF STANDARD, INTERNET ENGINEERING TASK FORCE, IETF, CH, août 1996 (1996-08), XP015007774 ISSN: 0000-0003
- DUROS UDCAST W DABBOUS INRIA SOPHIA-ANTIPOLIS H IZUMIYAMA N FUJII WIDE Y ZHANG HRL E: "A Link-Layer Tunneling Mechanism for Unidirectional Links" IETF STANDARD, INTERNET ENGINEERING TASK FORCE, IETF, CH, mars 2001 (2001-03), XP015008860 ISSN: 0000-0003
- GUSTAFSSON E ET AL: "ALWAYS BEST CONNECTED" IEEE WIRELESS COMMUNICATIONS, IEEE SERVICE CENTER, PISCATAWAY, NJ, US, vol. 10, no. 1, février 2003 (2003-02), pages 49-55, XP001144621 ISSN: 1536-1284
- BICHOT G: "A Multi-link architecture for a global wireless Internet connectivity" BROADWAN WORKSHOP 2005, [Online] 24 mai 2005 (2005-05-24), pages 1-5, XP002391596 Brussels, BE Extrait de l'Internet: URL:http://www.telenor.no/broadwan/Worksho pMay2005/Bichot_MultilinkForGlobalWireless Connectivity_paper.pdf> [extrait le 2006-07-21]
- BICHOT G: "A Multi-link architecture for a global wireless Internet connectivity" BROADWAN WORKSHOP 2005, [Online] 24 mai 2005 (2005-05-24), pages 1-17, XP002391597 Brussels, BE SLIDES Extrait de l'Internet: URL:http://www.telenor.no/broadwan/Worksho pMay2005/Bichot_MultilinkForGlobalWireless Connectivity.pdf> [extrait le 2006-07-21]
- BICHOT G: "A multiLink architecture for a global wireless Internet connectivi" WIBRACE WORKSHOP 2005, [Online] 23 juin 2005 (2005-06-23), pages 1-17, XP002391598 Dresden, DE SLIDES Extrait de l'Internet: URL:http://www.bb2all.org/papers/dresden/G uillaume-Global%20Wireless.pdf> [extrait le 2006-07-21]

## Description

### 1. Domaine technique.

La présente invention concerne l'accès à Internet pour un usager et plus particulièrement l'exploitation conjointe de plusieurs liens d'accès entre le domicile et le réseau.

### 2. Arrière-plan technologique

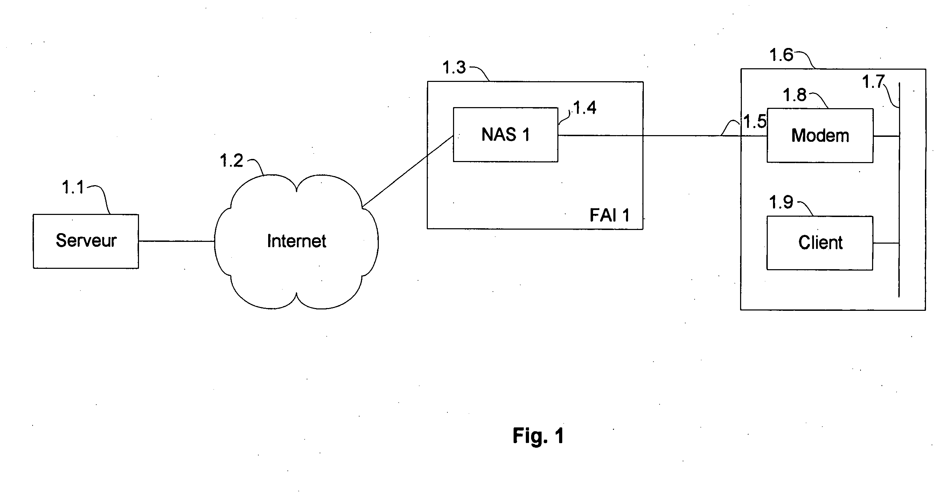

La connexion à un réseau distant, par exemple Internet, depuis le réseau de l'usager, illustrée par la **figure 1**, se fait classiquement à l'aide d'un dispositif d'accès, appelé généralement modem, référencé 1.8, qu'il s'agisse effectivement d'un appareil de modulation démodulation de signaux numériques sur un lien analogique ou par extension d'une autre technologie. Ce modem permet d'établir un lien, référencé 1.5, entre ce dispositif et un pair, référencé 1.4, au sein du réseau d'un fournisseur d'accès, référencé 1.3. Le pair étant appelé un NAS (« Network Access Server » en anglais). Les communications IP entre le réseau de l'usager et le réseau distant, ici le réseau Internet référencé 1.2, sont dirigées via le modem et transitent sur le lien. Les paquets IP à destination autre que le réseau interne de l'usager, référencé 1.7, sont routés via le modem, les paquets entrant sont eux acheminés depuis le réseau distant via le NAS puis le modem sur le réseau de l'usager. Un client, référencé 1.9, au sein du domicile de l'usager, référencé 1.6, peut donc accéder à un serveur, référencé 1.1, disponible sur Internet.

Un document US 2002/0133618 (Desai Bhavesh et al) divulgue une méthode et appareil pour l'émission de données d'un site de transmission jusqu'à un site de réception, incluant la division d'un flux de données à transmettre en plusieurs flux de données, transmis via une pluralité de canaux RF, et recombinaison de ces données au site de réception.

Un document « IP-in-IP tunneling to enable the simultaneous use of multiple IP interfaces for network level connection striping », de S. Phatak, Tom Goff et Jim Plusquellic de l'université de Maryland Baltimore County aux US, publié par Elsevier Science Publishers BV Amsterdam, avec numéro ISSN 1389-1286, divulgue un mécanisme d'agrégation de bande passante de multiples liens IP par division d'un flux de données parmi plusieurs interfaces réseau.

Un document US 2004/0090919 (Callon et al) divulgue un appareil et une méthode pour l'encapsulation et la transmission de paquets sur un réseau.

Un document US 02/41660 (Napali Networks, Inc) divulgue un système et méthode pour l'agrégation de multiples canaux d'information dans un réseau.

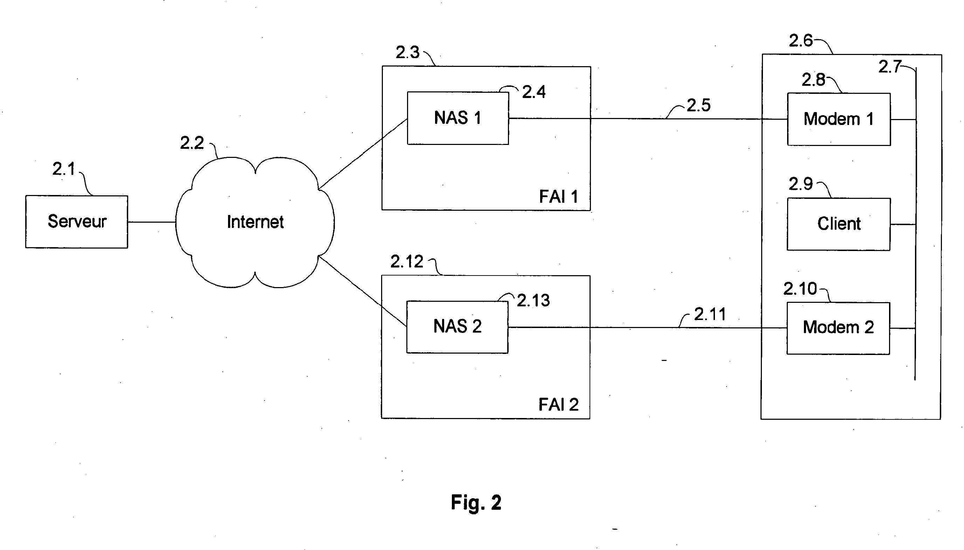

Le développement des techniques de connexion à un réseau distant entraîne l'existence de multiples opérateurs offrant cette connexion au moyen de diverses solutions techniques. Il est donc possible maintenant pour un usager de posséder plusieurs accès à un réseau distant. L'usager peut, par exemple, disposer d'un accès par modem classique, dit RTC, et un accès de plus haut débit offert par son opérateur câble où une offre regroupant un accès Internet, la téléphonie sur IP et la télévision via une connexion de type ADSL. Ce type de réseau d'usager est illustré figure 2. On y voit le domicile d'un usager, référencé 2.6, hébergeant le réseau de l'usager, référencé 2.7. Un client, par exemple un ordinateur personnel, référencé 2.9 est connecté à ce réseau 2.7. Un premier modem, référencé 2.8, par exemple un modem RTC, offre un premier accès via un premier fournisseur d'accès, référencé 2.3. Ce fournisseur d'accès 2.3 héberge un dispositif d'accès à son réseau référencé 2.4 permettant au modem 2.8 d'ouvrir un lien référencé 2.5. Ce fournisseur d'accès offre donc l'accès via son NAS 2.4 au réseau distant, typiquement Internet, référencé 2.2. L'usager possède un second modem, référencé 2.10, lui permettant d'accéder à Internet via un accès similaire offert par un second fournisseur, référencé 2.12. La manière dont le client 2.9 va accéder à un serveur, référencé 2.1, sur Internet et l'accès utilisé sera déterminé par configuration des tables de routages du client.

Des solutions permettant l'exploitation conjointe de divers accès existent. Il est par exemple possible de coupler un accès mono directionnel via satellite et une liaison bas débit RTC. Dans ce cas, la liaison bas débit est utilisée pour l'envoi des requêtes tandis que la liaison descendante à haut débit est utilisée pour les réponses. On dédit donc la liaison bas débit au trafic sortant, tandis que la liaison haut débit est dédiée au trafic entrant.

D'autres solutions existent également permettant de partager au sein du réseau, différents liens d'accès. Dans ce cas le choix de l'accès utilisé se fait au niveau de la connexion IP. Une connexion IP donnée sera établie via un des accès. Dans ce cas une requête et sa réponse empruntent obligatoirement le même accès.

Par contre une exploitation conjointe des différents liens d'accès de manière transparente, permettant d'utiliser les différents accès ayant chacun leur bande passante, comme un accès unique possédant une bande passante égale à la somme des bandes passantes des différents liens d'accès n'est pas possible.

### 3. Résumé de l'invention

L'invention permet d'exploiter les différents liens d'accès entre un réseau local et un réseau distant de manière conjointe et transparente. L'invention repose sur l'utilisation de différents tunnels IP empruntant les différents liens d'accès entre un appareil sur le réseau local de l'usager et un appareil situé sur le réseau distant. Ces différents tunnels sont vus comme un lien unique donnant accès au réseau distant.

L'invention concerne un procédé selon la revendication 1.

L'invention concerne également un modern multi-liens

### 4. Liste des figures.

L'invention sera mieux comprise, et d'autres particularités et avantages apparaîtront à la lecture de la description qui va suivre, la description faisant référence aux dessins annexés parmi lesquels :
- la figure 1, représente le schéma connu de la connexion d'un réseau local à Internet ;
- la figure 2, représente le schéma connu de la connexion d'un réseau local à Internet via deux accès différents ;
- la figure 3 représente le schéma de connexion d'un réseau local à Internet selon un exemple de réalisation de l'invention ;
- la figure 4 représente le schéma logique de la connexion dite multi-liens selon un exemple de réalisation de l'invention ;
- la figure 5 représente le schéma de l'architecture logicielle d'un exemple de réalisation de l'invention ; et
- la figure 6 représente les différents paquets de données ainsi que les adresses utilisées dans un exemple de réalisation de l'invention.

### 5. Description détaillée de l'invention.

Une description détaillée de l'invention ainsi qu'un exemple de réalisation vont maintenant être décrits.

Les règles de routages utilisées par les réseaux IP, font que dans, une configuration telle que celle décrite **figure 2**, la réponse à une requête passant par un des liens d'accès utilisera nécessairement le même lien lors de son retour. En effet, chaque fournisseur d'accès attribue une adresse ou un ensemble d'adresses à l'usager. Deux façons de gérer l'adressage des appareils de l'usager au sein de son réseau local peuvent être utilisée. Une première solution consiste en un adressage direct. Dans ce cas le fournisseur d'accès fournit des adresses au sein de son propre espace d'adressage aux différents appareils du réseau local. Ces différents appareils seront donc vus, au niveau de l'adressage IP, comme des appareils faisant partie intégrante du réseau du fournisseur d'accès. Ce type d'adressage est encore courant dans le cas de la connexion d'un appareil unique à Internet. Pour offrir plus de souplesse à l'utilisateur, il est possible d'utiliser au niveau du modem une technique de traduction d'adresses. Cela lui permet de connecter autant d'appareils qu'il le souhaite à son réseau domestique sans, pour autant, exiger autant d'adresses au sein de l'espace d'adressage de son fournisseur d'accès. Le modem est vu ici comme un routeur servant de passerelle d'accès. Cette technique bien connue sous le nom de NAT pour (« Network Address Translation » en anglais) permet d'organiser librement l'espace d'adressage du réseau de l'usager. Le modem se voit dans ce cas attribuer une adresse sur le réseau local cohérente avec cet espace privé d'adressage. Par contre lors de l'établissement de la connexion avec le fournisseur d'accès, le modem se voit attribuer une seconde adresse IP par le fournisseur d'accès au sein de son propre espace d'adressage. Le modem dispose donc de deux adresses, l'une pour l'interface le connectant au réseau domestique l'autre pour l'interface le connectant au fournisseur d'accès. Lorsqu'un client du réseau domestique envoie un paquet à destination du réseau distant, l'adresse source du paquet sera traduite par le modem qui la remplace par sa propre adresse au sein du réseau du fournisseur. Le modem apparaît donc comme l'appareil source de tous les paquets issus du réseau local et à destination du réseau distant. Le modem garde la trace des traductions faites de manière à pouvoir renvoyer sur le réseau interne les paquets constitutifs des réponses qu'il reçoit. Ici, il remplace sa propre adresse utilisée en adresse de destination des paquets par l'adresse sur le réseau de l'usager du client.

De ce fait, une requête issue du réseau local sera vu sur le réseau distant comme ayant son origine dans le réseau du fournisseur d'accès utilisé pour transmettre la requête. La réponse à cette requête sera donc dirigée vers ce fournisseur d'accès et ne pourra atteindre le client que via le réseau de ce fournisseur. L'accès utilisé pour la requête conditionne donc l'accès utilisé pour la réponse. On voit donc que s'il est possible d'utiliser plusieurs accès entre un réseau local et un réseau distant, le choix de l'accès ne peut se faire qu'au niveau de la session.

Si l'on désire partager plusieurs liens d'accès entre un réseau local et un réseau distant, de manière transparente de façon à pouvoir tirer parti de la totalité de la bande passante disponible, il faut imaginer un mécanisme permettant de router le trafic au niveau des paquets.

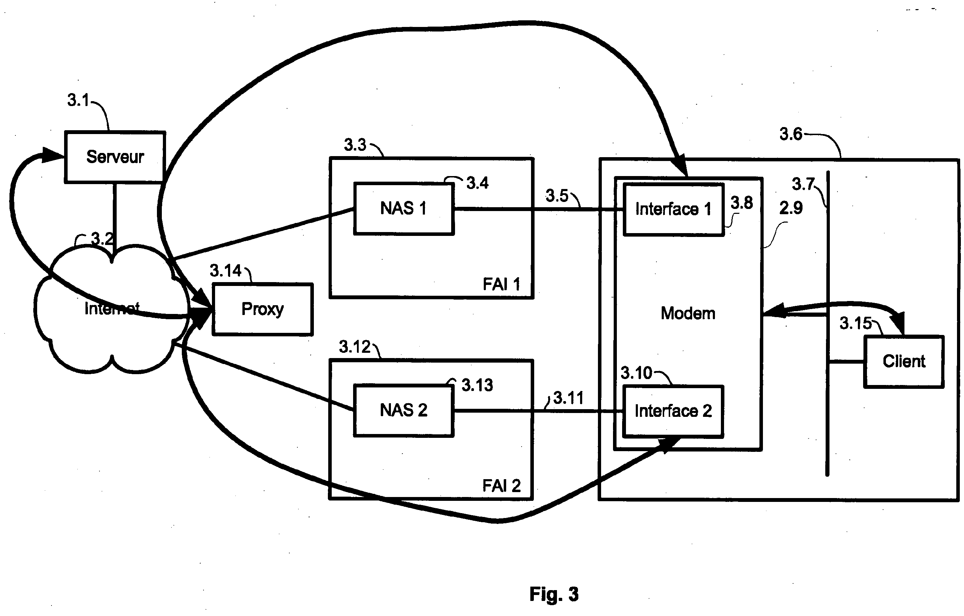

Un exemple de réalisation d'un tel mécanisme va maintenant être décrit. L'architecture de cet exemple est illustré **figure 3****.** L'espace d'un utilisateur, référencé 3.6, comprend un réseau local, référencé 3.7, au moins un client référencé 3.15. L'utilisateur possède plusieurs accès chez, par exemple, des fournisseurs d'accès différents. La figure illustre deux fournisseurs d'accès, FAI 1 et FAI 2, référencé 3.3 et 3.12. Chacun des ces fournisseurs dispose d'un serveur d'accès au réseau distant. Ces serveurs d'accès au réseau (NAS pour « Network Access Server » en anglais) NAS 1 et NAS 2 référencés 3.4 et 3.13, donnent accès au réseau distant, ici Internet référencé 3.2. Le réseau distant 3.2 héberge des serveurs tels que le serveur référencé 3.1 sur la figure. On cherche donc à établir une connexion entre le client 3.15 et le serveur 3.1 en utilisant conjointement les accès offerts par les deux fournisseurs d'accès. Le principe illustré ici pour deux fournisseurs étant généralisable directement à plus de deux fournisseurs. L'exemple de réalisation de l'invention se fonde sur d'une part un appareil de relais appelé passerelle multi-liens, référencé 3.14, et connecté au réseau distant 3.2 et d'autre part un modem multi-liens, référencé 2.9, contrôlant directement les interfaces, référencés 3.8 et 3.10, permettant l'ouverture d'un accès vers chaque fournisseur d'accès. L'exemple de réalisation de l'invention repose sur l'établissement de tunnels IP entre le modem multi-liens et la passerelle multi-liens. Le modem multiliens, comme la passerelle multi-liens, choisissent pour chaque paquet de données échangé entre le réseau local et le réseau distant le tunnel et donc l'accès utilisé. Ce choix peut dépendre de différents paramètres comme la bande passante de chaque accès, le type de trafic auquel participe le paquet, des statistiques instantanées d'utilisation de chaque lien, le délai de transfert du paquet (« round trip delay » en anglais) ou tout autre paramètre pertinent. De cette façon, les différents tunnels établis seront utilisés conjointement de manière à former ce que nous appelons un multi-liens.

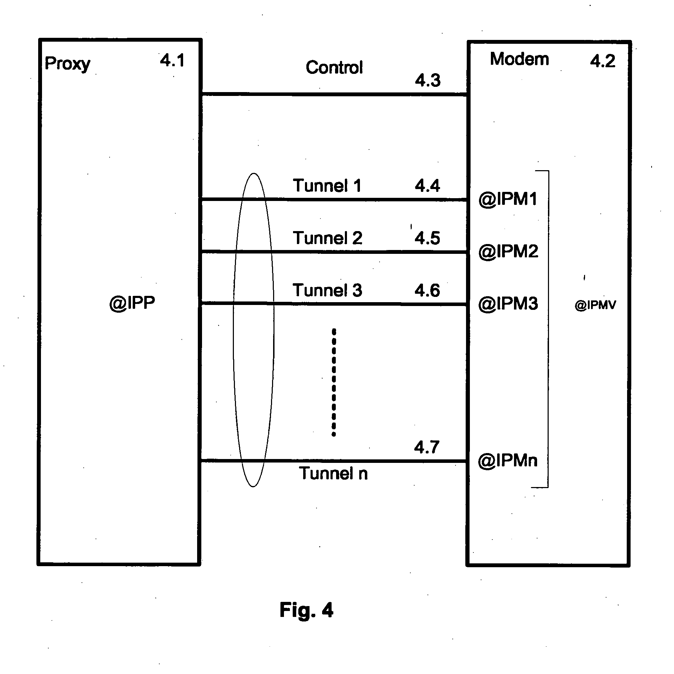

La **figure 4** illustre les liens logiques existant entre la passerelle multi-liens, référencé 4.1 et le modem multi-liens, référencé 4.2. Une première connexion, référencée 4.3, est initiée, par exemple, par le modem multi-liens dans une phase d'initialisation. Cette connexion est dédiée aux échanges entre la passerelle multi-liens et le modem multi-liens aux fins de contrôler le fonctionnement du multi-liens. Ensuite on identifie une connexion par accès, référencées 4.4, 4.5, 4.6 et 4.7. Un tunnel IP est constitué sur chacune de ces connexions. Les tunnels IP, peuvent par exemple être constitués en utilisant le protocole GRE (« Generic Routing Encapsulation » en anglais) définit dans la demande de commentaires RFC2784 de l'IETF (« Internet Engineering Task Force » en anglais). Chaque tunnel est établis entre d'une part la passerelle en son adresse IP sur le réseau distant, appelée @IPP sur la figure et l'adresse attribuée au modem par chaque FAI, lors de l'établissement de la connexion, appelée @IPMi, i étant le numéro de l'accès.

Lors d'une phase d'initialisation, le modem multi-liens va commencer par ouvrir les connexions de chacune des interfaces avec le réseau distant. L'ouverture de cette connexion se fait à l'aide de protocoles connus comme par exemple PPP (« Point to Point Protocol » en anglais) utilisé par exemple pour les connexions classique RTC, DHCP (« Dynamic Host Control Protocol » en anglais) utilisé sur Ethernet, PPPoE (« PPP over Ethernet » en anglais) utilisé par exemple pour les connexions ADSL, ou tout autre type de protocole permettant l'établissement d'une connexion. De manière générale, lors de l'établissement de la connexion, une adresse IP va être attribuée par le fournisseur d'accès à l'appareil se connectant. Cette adresse IP sera donc fournie au modem multi-liens qui se verra doter d'une adresses par accès, chaque adresse correspondant à l'interface le connectant au réseau.

Une fois que les différentes connexions seront ouvertes, le modem va utiliser l'une d'entre elle indifféremment pour établir la connexion de contrôle avec la passerelle multi-liens. La façon dont le modem prend connaissance de l'adresse de la passerelle est indifférente, il peut s'agir par exemple d'une configuration manuelle ou d'un paramètre envoyé par l'un des fournisseurs d'accès lors de l'établissement de l'une des connexions.

Une fois que cette connexion ou liaison de contrôle est établie, il faut établir le multi-liens. Cet établissement peut commencer par une phase éventuelle d'authentification entre la passerelle et le modem. Ensuite le modem va déclarer les différentes connexions établies ainsi que l'adresse qui lui fut attribuée pour chaque connexion.

Ensuite, de la même façon qu'un NAS attribue une adresse IP dans son propre espace d'adressage à un appareil se connectant, la passerelle multi-liens va attribuer une adresse IP au modem multi-liens dans son propre espace d'adressage. Cette adresse est appelée @IPMV, pour adresse IP virtuelle du modem. La circulation des paquets échangés entre le client et un serveur du réseau distant à travers le multi-liens sera décrit plus loin.

Les appareils ou clients du réseau local devront avoir leur table de routage indiquant le modem comme passerelle vers le réseau distant pour utiliser les ressources du multi-liens. L'existence du multi-liens n'altère en rien la possibilité d'utiliser les différents accès indépendamment du multi-liens par configuration du routage sur le modem.

Une fois le multi-liens établi, il est utile de conserver la connexion de contrôle. En effet, cela permet de faire face à une modification du nombre d'accès entre le réseau local et le réseau distant. Lorsque, par exemple, une connexion tombe, le modem doit prévenir la passerelle de ne plus utiliser cet accès pour le trafic en provenance du réseau distant vers le réseau local. Il est également possible d'ajouter un nouvel accès qui se trouverait disponible au multi-liens. La liaison de contrôle peut également servir à communiquer entre la passerelle et le modem des informations sur les différents liens, information pouvant servir à la politique de choix d'un des accès lors du routage d'un paquet.

Un développement intéressant de cette possibilité de faire évoluer le multi-liens de manière dynamique au cours du temps quant à sa composition est le traitement de l'itinérance (« roaming » en anglais). En effet, un appareil itinérant lors de son déplacement va voir évoluer les réseaux auxquels il peut avoir accès. Tant qu'une connexion au moins reste opérationnelle, le multi-liens reste fonctionnel. La perte de la connexion à un réseau se traduit par le retrait de ce lien du multi-liens, tandis que la connexion à un nouveau réseau devenu accessible se traduit par son ajout dans le multi-liens. De cette façon un appareil itinérant peut migrer de réseaux en réseaux tout en conservant sa connexion avec les réseaux distants via le multi-liens, les changements d'accès restant transparents pour les applications.

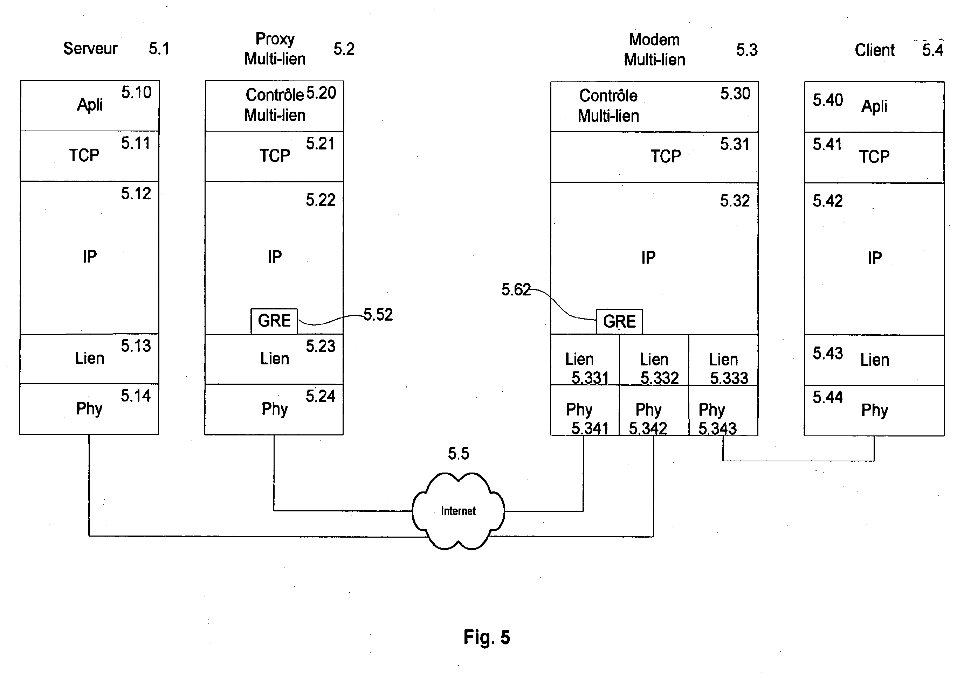

La **figure 5** illustre le schéma de l'architecture logicielle de l'exemple de réalisation de l'invention. On y voit un client, référencé 5.4, possédant une architecture logicielle classique constituée d'une couche physique, référencée 5.44, pouvant être de l'Ethernet ou un réseau sans fil 802.11 par exemple, d'une couche lien, référencée 5.43, de la couche IP référencée 5.42, au dessus la couche transport TCP référencée 5.41 et une couche applicative référencée 5.40. A l'autre bout de la chaîne, le serveur, référencé 5.1, possède lui aussi cette même architecture logicielle classique, la couche physique, référencée 5.14, la couche lien, référencée 5.13, la couche IP, référencée 5.12, la couche TCP, référencée 5.11 et la couche applicative, référencée 5.10.

La passerelle multi-liens, référencée 5.2, va elle aussi présenter la même architecture, la couche physique, référencée 5.24, la couche lien, référencée 5.23, la couche IP, référencée 5.22, la couche TCP, référencée 5.21 et la couche applicative, référencée 5.20. Par contre, la passerelle possède un module de gestion du multi-liens dans sa couche applicative, tandis qu'un module de gestion des tunnels, référencé 5.52, selon le protocole GRE est intégré à la couche IP. Ce module intègre, outre la gestion des tunnels proprement dits, le module d'aiguillage permettant le choix du tunnel pour chaque paquet.

Le modem multi-liens, référencé 5.3, possède quant à lui plusieurs couches physiques référencées 5.341, 5.342 et 5.343. Ces couches physiques sont pilotées par autant de couches lien référencées 5.331, 5.332 et 5.333. Ces différentes interfaces comprennent une première interface, 5.333 et 5.343, de connexion du modem multi-liens avec le réseau local. Les autres interfaces correspondent aux différents liens entre le modem et le réseau distant, référencé 5.5, ici Internet. La couche IP, référencée 5.32, contient le module de gestion des tunnels GRE référencé 5.62. Ici aussi, ce module intègre le module d'aiguillage dynamique du tunnel à utiliser sur une base paquet. On retrouve classiquement la couche TCP, référencée 5.31, ainsi que la couche applicative 5.30 contenant le logiciel de contrôle du multi-liens.

Le rôle des modules de contrôle du multi-liens va être d'assurer la phase d'initialisation déjà décrite ainsi que le suivi du multi-liens. Ce suivi va comprendre l'adaptation dynamique des retraits et des ajouts de liens ainsi que de l'échange de paramètres ou mesures de performance de chaque lien de façon à permettre le choix dynamique du lien utilisé par chaque module d'aiguillage.

Le choix fait pour l'exemple de réalisation de l'invention consiste en l'encapsulation dans les tunnels, IP selon GRE de paquets de niveau MAC de type Ethernet. Il est possible de réaliser l'invention en restant au niveau IP et d'utiliser d'autres techniques de tunnels. Dans l'exemple de réalisation de l'invention le multi-liens émule une connexion Ethernet entre la passerelle et le modem. Cette émulation se traduit par la création au sein du module GRE, tant de la passerelle que du modem, d'une interface Ethernet virtuelle correspondant au multi-liens. D'autre part, l'établissement du multi-liens, de manière comparable à l'établissement d'une connexion sur un lien, va attribuer une adresse IP virtuelle au modem. Le modem est donc à même de gérer une étape de traduction d'adresses IP (NAT) pour masquer le réseau local vis à vis du réseau distant. Une autre option étant d'allouer autant d'adresses que de machines sur le réseau local, mais cette solution n'est pas préférée en raison de sa consommation d'adresses. La passerelle fonctionne donc comme un serveur d'accès au réseau en allouant des adresses IP de son propre espace d'adressage aux modems multi-liens établissant une connexion avec lui.

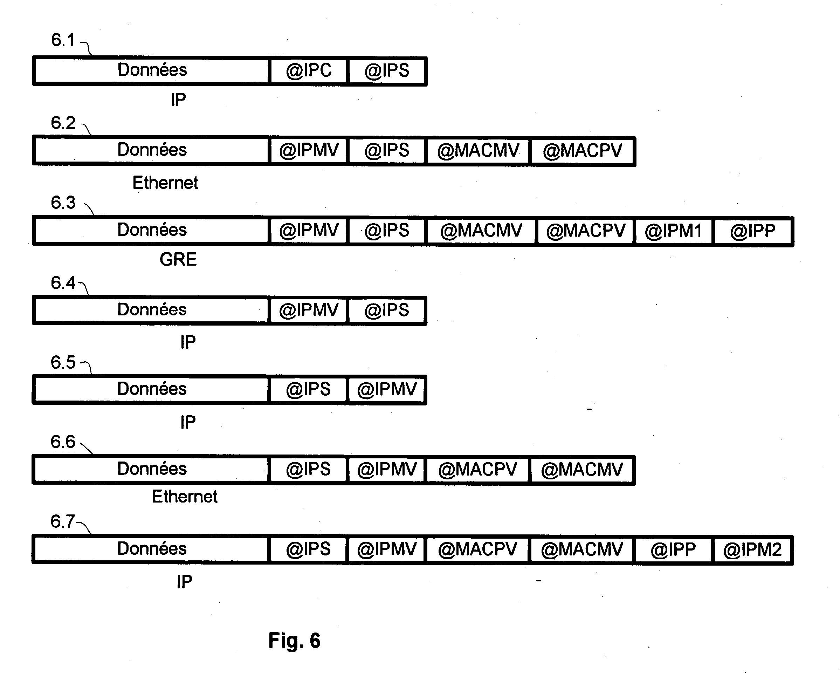

Le détail d'un échange de messages entre un client du réseau local et un serveur sur le réseau distant va maintenant être décrit en référence à la figure 6. Le client émet une requête référencée 6.1. Cette requête est un paquet IP possédant comme adresse source l'adresse IP du client sur le réseau local @IPC et comme adresse destination l'adresse IP du serveur sur le réseau distant @IPS. Le modem multi-liens étant déclaré comme passerelle vers le réseau distant, le paquet est routé vers celui-ci. Sur le modem, une première phase de traduction d'adresse est effectuée, l'adresse source du paquet est remplacée par l'adresse IP virtuelle @IPMV attribuée au modem lors de l'initialisation du multi-liens. Le modem garde en mémoire l'adresse du client à l'origine de la requête. Le paquet est ensuite pris en charge par le module GRE. Celui-ci encapsule le paquet dans un paquet Ethernet, référencé 6.2, dont les adresses source et destination sont les adresses des interfaces Ethernet virtuelles du modem et de la passerelle @MACMV et @MACPV. Ce paquet Ethernet est lui-même encapsulé dans un paquet IP selon GRE, référencé 6.3. C'est ici qu'intervient le choix du tunnel. En fonction du tunnel choisi, l'adresse IP source du paquet sera l'adresse IP attribuée au modem lors de l'établissement du lien correspondant à ce tunnel. L'exemple illustré utilise le premier tunnel, l'adresse source est donc l'adresse IP du modem attribuée par le premier fournisseur d'accès @IPM1, l'adresse de destination est l'adresse de la passerelle @IPP. Ce paquet est ensuite traité par l'interface correspondant au tunnel choisi et routé vers la passerelle. Celui-ci, décapsule le paquet, référencé 6.4, et le route vers le serveur. La réponse du serveur, référencée 6.5, et à destination de l'adresse virtuelle @IPMV attribuée par la passerelle est routée vers sa destination via la passerelle. Celui-ci effectue l'encapsulation Ethernet résultant dans le paquet référencé 6.6. Ici, intervient de nouveau le choix du tunnel que va emprunter la réponse. L'exemple illustre le choix du second tunnel, le paquet Ethernet va donc être encapsulé dans un paquet GRE dont l'adresse de destination est l'adresse @IPM2, adresse du modem attribuée par le second fournisseur d'accès et l'adresse source l'adresse @IPP de la passerelle. Ce paquet IP sera donc routé via le réseau distant vers le second fournisseur pour arriver sur le modem via le second accès. Sur le modem le paquet sera décapsulé, l'adresse de destination du client sera rétablies comme adresse de destination conformément au protocole de traduction d'adresse (NAT) et acheminé vers ce dernier. On voit donc que le client et le serveur peuvent communiquer via le multi-liens comme s'il s'agissait d'une unique connexion reliant le réseau local et le réseau distant. Le modem comme la passerelle étant libres de router chaque paquet indifféremment via les différents accès constituant le multi-liens. Le chemin emprunté par un requête ne déterminant pas le chemin de la réponse à cette requête. Cette connexion établie entre le modem et la passerelle sera utilisée de manière transparente par les applications fonctionnant sur le client et se connectant avec des appareils du réseau distant. En effet, les applications vont communiquer normalement et ouvrir des connexions sans devoir être modifiées. Tous se passe pour ces applications comme si la connexion était une connexion unique classique reliant le réseau local au réseau distant. Ceci reste vrai dans le cas où le réseau local est réduit au seul appareil client intégrant directement la fonctionnalité de modem multi-liens.

De cette manière, par une politique de choix du tunnel judicieuse, il est possible de tirer pleinement parti des différentes connexions entre le réseau local et le réseau distant. Cette politique de choix peut être basées sur une répartition statistique tenant compte des différentes bandes passantes des liens. Mais il est également possible de recueillir dynamiquement des statistiques sur le taux d'utilisation des liens pour déterminer ce choix. Dans ce cas, le modem et la passerelle vont partager les informations sur les liens via la connexion de contrôle. Différents paramètres peuvent être retenu pour ce choix, comme le taux d'erreur, le temps de parcours, la bande passante, etc. Il est également possible de privilégier certains lien pour certains types de trafic, comme de choisir un lien ayant un faible temps de parcours pour de la voix et un lien ayant une forte bande passante pour de la vidéo. Il est également possible de tenir compte de critères économiques dans la politique de choix, notamment si certains liens offrent une tarification à la quantité de données transitant par le lien.

Les paquets échangés via plusieurs liens peuvent perdre leur ordre de séquence initial, particulièrement si les différents liens ont des temps de latence différents. Bien que le ré ordonnancement soit géré par les couches supérieures de protocoles comme TCP, il peut être intéressant de le réaliser à ce niveau. Pour ce faire, il est possible d'utiliser une option de GRE permettant d'ajouter un numéro de séquence permettant de recomposer la séquence.

L'exemple de réalisation illustre une technique de tunnel, GRE, et l'émulation d'un lien Ethernet dans le tunnel. Il est évident pour l'homme du métier qu'il est possible d'utiliser toute autre technique de création de tunnel et que d'autre choix de la couche encapsulée dans le tunnel sont possibles. En particulier, il est possible d'encapsuler directement les paquets IP sans passer par un paquet Ethemet.

Bien entendu, l'invention ne se limite pas aux modes de réalisation décrits précédemment.

En particulier, l'exemple de réalisation illustre le cas d'un modem reliant un réseau local à un réseau distant et étant utilisé pour le relais des paquets entre un ou des clients du réseau local et des appareils, typiquement serveur, du réseau distant. Il est évident que, selon l'invention, le réseau local peut se réduire à l'appareil appelé modem, lequel est alors intégré à un client unique désirant communiquer avec le réseau distant.

## Revendications

1. Procédé d'établissement d'une connexion de communication par paquet de données numériques entre un réseau local et un réseau distant,
ledit réseau local étant connecté à un modem multi-liens,
ledit modem multi-liens étant connecté par des connexions distinctes à au moins un premier serveur d'accès associé à un premier fournisseur d'accès et à au moins un deuxième serveur d'accès associé à un deuxième fournisseur d'accès,
lesdits au moins un premier et au moins un deuxième serveurs d'accès donnant accès audit réseau distant,
ledit réseau distant comprenant une passerelle multi-liens,
chacun desdits au moins un premier et au moins un deuxième serveur d'accès fournissant une adresse IP par connexion audit modem multi-liens,
**caractérisé en ce qu'**il comporte les étapes suivantes :
- ouverture d'une liaison de contrôle entre ledit modem multi-liens et ladite passerelle multi-liens en utilisant une desdites connexions entre ledit modem multi-liens et ladite passerelle multi-liens;
- attribution, sur la liaison de contrôle, d'une adresse IP virtuelle au modem multi-liens par ladite passerelle multi-liens ;
- pour chacune des connexions entre ledit modem multi-liens et ladite passerelle multi-liens, établissement d'un tunnel IP de communication en utilisant des adresses IP transmis par ladite liaison de contrôle, comprenant l'adresse IP de la connexion ; et
- pour des paquets de données numériques échangés entre le réseau local et le réseau distant, et à la réception par ledit modem multi-liens d'une requête d'un client du réseau local destinée à un serveur sur un réseau distant, ledit modem multi-liens choisit le tunnel IP de communication à utiliser, et remplace des adresses source desdits paquets par ladite adresse IP virtuelle avant encapsulation sur le tunnel IP choisi, et rétablit, dès réception de la réponse à la requête, l'adresse du client, gardée en mémoire, comme l'adresse de destination et achemine la réponse vers le client dans le réseau local.

2. Procédé selon la revendication 1, **caractérisé en ce que** le procédé comprend une adaptation dynamique de retraits et d'ajouts de liens via la liaison de contrôle.

3. Procédé selon l'une des revendications 1 ou 2, **caractérisé en ce que** l'étape de choix du tunnel de communication est effectuée en fonction de paramètres propres à chaque lien sur lequel le tunnel est établi, de sorte que le choix du tunnel de communication utilisé par une requête ne détermine pas le choix du tunnel de communication utilisé par la réponse à ladite requête.

4. Procédé selon l'une des revendications 1 à 3, **caractérisé en ce que** le procédé est mis en oeuvre par ledit modem multi-liens.

5. Procédé selon l'une des revendications 1 à 4, **caractérisé en ce que** le procédé est mis en oeuvre par ladite passerelle multi-liens.

6. Procédé selon l'une des revendications 1 à 5, **caractérisé en ce que** la passerelle multi-liens, à la réception d'une requête d'un modem multi-liens provenant d'un client d'un réseau local et destiné à un serveur sur un réseau distant, le route vers le serveur distant, et à la réception de la réponse du serveur distant, la passerelle multi-liens choisit le tunnel de communication à utiliser et envoie la réponse au modem multi-liens, en choisissant l'une des une des connexions du modem au dits au moins un premier et au moins un deuxième serveur d'accès qui lui ont été communiqués par le lien de contrôle lors de l'initialisation du multi-liens, en spécifiant comme adresse source l'adresse de la passerelle multi-liens.

7. Modem multi-liens (3.8, 4.2, 5.3) de communication par paquet de données numériques entre un réseau local et un réseau distant,
ledit réseau local étant connecté audit modem multi-liens,
ledit modem multi-liens étant connecté par des connexions distinctes à au moins un premier serveur d'accès associé à un premier fournisseur d'accès et à au moins un deuxième serveur d'accès associé à un deuxième fournisseur d'accès,
lesdits au moins un premier et au moins un deuxième serveurs d'accès donnant accès audit réseau distant,
ledit réseau distant comprenant une passerelle multi-liens,
chacun desdits au moins un premier et au moins un deuxième serveur d'accès fournissant une adresse IP par connexion audit modem multi-liens,
**caractérisé en ce qu'**il comporte :
- des moyens d'ouverture d'une liaison de contrôle entre ledit modem multi-liens et ladite passerelle multi-liens en utilisant une desdites connexions entre ledit modem multi-liens et ladite passerelle multi-liens;
- un moyen de gestion d'une adresse IP virtuelle attribuée sur la liaison de contrôle au modem multi-liens par ladite passerelle multi-liens ;
- pour chacune des connexions entre ledit modem multi-liens et ladite passerelle multi-liens, un moyen d'établissement d'un tunnel IP de communication en utilisant des adresses IP transmis par ladite liaison de contrôle, comprenant l'adresse IP de la connexion ; et
pour les paquets de données numériques échangés entre le réseau local et le réseau distant, et à la réception par ledit modem multi-liens d'une requête d'un client du réseau local destinée à un serveur sur un réseau distant, ledit modem multi-liens, par un moyen de choix choisit le tunnel IP de communication à utiliser, des adresses source desdits paquets étant remplacées par ladite adresse IP virtuelle avant encapsulation sur le tunnel IP choisi, et ledit modem multi-liens rétablit, dès réception de la réponse à la requête, l'adresse du client, gardée en mémoire, comme l'adresse de destination et achemine la réponse vers le client dans le réseau local.

## Claims

1. Method for establishing a communication connection by digital data packet between a local network and a remote network,
said local network being connected to a multi-link modem,
said multi-link modem being connected by separate connections to at least one first access server associated with a first access provider and at least one second access server associated with a second access provider,
said at least one first and at least one second access servers giving access to said remote network,
said remote network comprising a multi-link gateway,
each of said at least one first and at least one second access servers providing one IP address per connection to said multi-link modem,
**characterized in that** it comprises the following steps:
- opening of a control link between said multi-link modem and said multi-link gateway by using one of said connections between said multi-link modem and said multi-link gateway,
- allocation, on the control link, of a virtual IP address to the multi-link modem by said multi-link gateway,
- for each of the connections between said multi-link modem and said multi-link gateway, establishment of a communication IP tunnel by using the IP addresses sent over said control link, comprising the IP address of the connection, and
- for digital data packets exchanged between the local network and the remote network, and upon the reception by said multi-link modem of a request from a client of the local network intended for a server on a remote network, said multi-link modem chooses the communication IP tunnel to use, and replaces source addresses of said packets by said virtual IP address before encapsulation on the chosen IP tunnel, and re-establishes, on reception of the response to the request, the address of the client, kept in memory, as the destination address and routes the response to the client in the local network.

2. Method according to claim 1, **characterized in that** the method comprises a dynamic adaptation of removals and additions of links via the control link.

3. Method according to claim 1 or 2, **characterized in that** the step for choosing the communication tunnel is carried out according to parameters specific to each link on which the tunnel is established, such that the choice of the communication tunnel used by a request does not determine the choice of the communication tunnel used by the response to said request.

4. Method according to one of claims 1 to 3, **characterized in that** the method is implemented by said multi-link modem.

5. Method according to one of claims 1 to 4, **characterized in that** the method is implemented by said multi-link gateway.

6. Method according to one of claims 1 to 5, **characterized in that** the multi-link gateway, upon the reception of a request of a multi-link modem from a client of a local network and intended for a server on a remote network, routes it to the remote server, and on reception of the response of the remote server, the multi-link gateway chooses the communication tunnel to use and sends the response to the multi-link modem, by choosing one of the connections of the modem to said at least one first and at least one second access server that have been communicated to it over the control link during the initialisation of the multi-links, by specifying as source address the address of the multi-link gateway.

7. Multi-link modem (3.8, 4.2, 5.3) for digital data packet communication between a local network and a remote network,
said local network being connected to said multi-link modem,
said multi-link modem being connected by separate connections to at least one first access server associated with a first access provider and a least one second access server associated with a second access provider,
said at least one first and at least one second access servers giving access to said remote network,
said remote network comprising a multi-link gateway,
each of said at least one first and at least one second access servers providing one IP address per connection to said multi-link modem,
**characterized in that** it comprises:
- means for opening of a control link between said multi-link modem and said multi-link gateway by using one of said connections between said multi-link modem and said multi-link gateway,
- a means for managing a virtual IP address allocated on the control link to the multi-link modem by said multi-link gateway,
- for each of the connections between the multi-link modem and said multi-link gateway, a means of establishing a communication IP tunnel by using IP addresses sent over said control link, comprising the IP address of the connection, and
for digital data packets exchanged between the local network and the remote network, and upon the reception by said multi-link modem of a request from a client of the local network intended for a server on a remote network, said multi-link modem, by a means of choosing chooses the communication IP tunnel to use, and source addresses of said packets being replaced by said virtual IP address before encapsulation on the chosen IP tunnel, and said multi-link modem re-establishes, on reception of the response to the request, the address of the client, kept in memory, as the destination address and routes the response to the client in the local network.

## Patentansprüche

1. Verfahren zum Erstellen einer Kommunikationsverbindung pro digitalem Datenpaket zwischen einem lokalen Netzwerk und einem entfernten Netzwerk,
wobei das lokale Netzwerk mit einem Mehrfachverbindungsmodem verbunden ist,
wobei das Mehrfachverbindungsmodem durch separate Verbindungen mit mindestens einem ersten Zugangsserver, der einem ersten Zugangsanbieter zugeordnet ist, und mit mindestens einem zweiten Zugangsserver verbunden ist, der einem zweiten Zugangsanbieter zugeordnet ist,
wobei die, mindestens ein erster und mindestens ein zweiter, Zugangsserver Zugang zu dem entfernten Netzwerk gewähren,
wobei das entfernte Netzwerk einen Mehrfachverbindungsnetzübergang aufweist,
wobei jeder, der mindestens eine erste und der mindestens eine zweite, Zugangsserver dem Mehrfachverbindungsmodem eine IP-Adresse pro Verbindung anbietet,
**dadurch gekennzeichnet, dass** es die nachfolgenden Schritte umfasst:
- Öffnen einer Steuerungsverbindung zwischen dem Mehrfachverbindungsmodem und dem Mehrfachverbindungsnetzübergang, indem eine der Verbindungen zwischen dem Mehrfachverbindungsmodem und dem Mehrfachverbindungsnetzübergang verwendet wird;
- Zuweisen, auf der Steuerungsverbindung, einer virtuellen IP-Adresse für das Mehrfachverbindungsmodem durch den Mehrfachverbindungsnetzübergang,
- Erstellen, für jede der Verbindungen zwischen dem Mehrfachverbindungsmodem und dem Mehrfachverbindungsnetzübergang, eines IP-Kommunikationstunnels, indem über die Steuerungsverbindung übertragene IP-Adressen verwendet werden, die die IP-Adresse der Verbindung aufweisen; und
- für digitale Datenpakete, die zwischen dem lokalen Netzwerk und dem entfernten Netzwerk ausgetauscht werden, und beim Empfang durch das Mehrfachverbindungsmodem einer Anfrage von einem Klienten des lokalen Netzwerkes, die für einen Server in einem entfernten Netzwerk bestimmt ist, wählt das Mehrfachverbindungsmodem den zu verwendenden IP-Kommunikationstunnel aus, und ersetzt, vor der Verkapselung auf dem ausgewählten IP-Tunnel, die Quelladressen der Pakete durch die virtuelle IP-Adresse, und stellt, sobald die Antwort auf die Anfrage empfangen wird, die Adresse des im Speicher vorgehaltenen Klienten als Zieladresse wieder her und leitet die Antwort zu dem Klienten in dem lokalen Netzwerk weiter.

2. Verfahren nach Anspruch 1, **dadurch gekennzeichnet, dass** das Verfahren eine dynamische Anpassung an entfernte und hinzugefügte Verbindungen über die Steuerungsverbindung aufweist.

3. Verfahren nach einem der Ansprüche 1 oder 2, **dadurch gekennzeichnet, dass** der Schritt zur Auswahl des Kommunikationstunnels in Abhängigkeit von Parametern ausgeführt wird, die für jede Verbindung, auf welcher der Tunnel erstellt wird, spezifisch sind, so dass die Auswahl des von einer Anfrage verwendeten Kommunikationstunnels nicht über die Auswahl des Kommunikationstunnels entscheidet, welcher von der Antwort auf die Anfrage verwendet wird.

4. Verfahren nach einem der Ansprüche 1 bis 3, **dadurch gekennzeichnet, dass** das Verfahren von dem Mehrfachverbindungsmodem angewendet wird.

5. Verfahren nach einem der Ansprüche 1 bis 4, **dadurch gekennzeichnet, dass** das Verfahren von dem Mehrfachverbindungsnetzübergang angewendet wird.

6. Verfahren nach einem der Ansprüche 1 bis 5, **dadurch gekennzeichnet, dass** der Mehrfachverbindungsnetzübergang beim Empfang einer Anfrage von einem Mehrfachverbindungsmodem, die von einem Klienten eines lokalen Netzwerkes stammt und für einen Server in einem entfernten Netzwerk bestimmt ist, ihn zu einem entfernten Server leitet, und, beim Empfang der Antwort von dem entfernten Server, der Mehrfachverbindungsnetzübergang den zu verwendenden Kommunikationstunnel auswählt und dem Mehrfachverbindungsmodem die Antwort sendet, indem er eine der einzelnen Verbindungen des Modems mit dem mindestens einen ersten und dem mindestens einen zweiten Zugangsserver auswählt, die ihm von der Steuerungsverbindung während der Initialisierung der Mehrfachverbindungen mitgeteilt wurden, indem die Adresse des Mehrfachverbindungsnetzüberganges als Quelladresse genau angegeben wird.

7. Mehrfachverbindungsmodem (3.8, 4.2, 5.3) zur Kommunikation pro digitalem Datenpaket zwischen einem lokalen Netzwerk und einem entfernten Netzwerk,
wobei das lokale Netzwerk mit dem Mehrfachverbindungsmodem verbunden ist,
wobei das Mehrfachverbindungsmodem durch separate Verbindungen mit mindestens einem ersten Zugangsserver, der einem ersten Zugangsanbieter zugeordnet ist, und mit mindestens einem zweiten Zugangsserver verbunden ist, der einem zweiten Zugangsanbieter zugeordnet ist,
wobei die, mindestens ein erster und mindestens ein zweiter, Zugangsserver Zugang zu dem entfernten Netzwerk gewähren, wobei das entfernte Netzwerk einen Mehrfachverbindungsnetzübergang aufweist,
wobei jeder, der mindestens eine erste und mindestens eine zweite, Zugangsserver dem Mehrfachverbindungsmodem eine IP-Adresse pro Verbindung anbietet,
**dadurch gekennzeichnet, dass** es umfasst:
- Mittel zum Öffnen einer Steuerungsverbindung zwischen dem Mehrfachverbindungsmodem und dem Mehrfachverbindungsnetzübergang, indem eine der Verbindungen zwischen dem Mehrfachverbindungsmodem und dem Mehrfachverbindungsnetzübergang verwendet wird;
- Mittel zum Verwalten einer virtuellen IP-Adresse, die dem Mehrfachverbindungsmodem durch den Mehrfachverbindungsnetzübergang auf der Steuerungsverbindung zugewiesen wird;
- für jede der Verbindungen zwischen dem Mehrfachverbindungsmodem und dem Mehrfachnetzübergang, ein Mittel zum Erstellen eines IP-Kommunikationstunnels, indem die von der Steuerungsverbindung übertragenen IP-Adressen verwendet werden, die die IP-Adresse der Verbindung aufweisen; und
- für die digitalen Datenpakete, die zwischen dem lokalen Netzwerk und dem entfernten Netzwerk ausgetauscht werden, und beim Empfang durch das Mehrfachverbindungsmodem einer Anfrage von einem Klienten des lokalen Netzwerkes, die für einen Server in dem entfernten Netzwerk bestimmt ist, wählt das Mehrfachverbindungsmodem den zu verwendenden IP-Kommunikationstunnel durch ein Mittel zum Auswählen aus, wobei die Quelladressen der Pakete vor der Verkapselung auf dem ausgewählten IP-Tunnel durch die virtuelle IP-Adresse ersetzt werden, und das Mehrfach-Verbindungsmodem stellt, sobald die Antwort auf die Anfrage empfangen wird, die Adresse des im Speicher vorgehaltenen Klienten als Zieladresse wieder her, und leitet die Antwort an den Klienten in dem lokalen Netzwerk weiter.
